# EUROPEAN PATENT SPECIFICATION

(11) **EP 3 232 802 B1**
(45) Date of publication and mention of the grant of the patent: **06.11.2019**
(21) Application number: 15817274.2
(22) Date of filing: 18.12.2015
(51) Int. Cl.: A23G 1/00, A23D 7/015, A23D 9/02, A23G 1/52, A23G 1/36

(54) **METHOD FOR MAKING EDIBLE PRODUCTS COMPRISING FAT CRYSTALS OF COCOA BUTTER**
VERFAHREN ZUR HERSTELLUNG VON KOKOABUTTER KRISTALLEN ENTHALTENDEN PRODUKTEN
PROCÉDÉ DE PRÉPARATION DE PRODUITS COMPRENANT DES CRISTAUX DE BEURRE DE CACAO

(30) Priority: 19.12.2014 EP 14199331; 19.12.2014 EP 14199333; 19.12.2014 EP 14199316; 19.12.2014 EP 14199321; 15.10.2015 EP 15189879; 15.10.2015 EP 15189885
(43) Date of publication of application: 25.10.2017
(73) Proprietor: Société des Produits Nestlé S.A., 1800 Vevey (CH)
(72) Inventor: WINDHAB, Erich Josef, 8261 Hemishofen (CH); KOLLER, Cornelia, 9240 Uzwil (CH)
(74) Representative: Lumsden, Stuart Edward Henry
(86) International application number: PCT/EP2015/080558
(87) International publication number: WO 2016/097326

(56) References cited:
- FR-A1- 2 995 182
- US-A- 4 272 558
- US-A1- 2006 141 110
- US-A1- 2011 159 159
- J. HAEDELT ET AL: "Bubble-Included Chocolate: Relating Structure with Sensory Response", JOURNAL OF FOOD SCIENCE, vol. 72, no. 3, April 2007 (2007-04), pages E138-E142, XP055015547, ISSN: 0022-1147, DOI: 10.1111/j.1750-3841.2007.00313.x

## Description

The present invention relates to a novel method to generate stable fat crystals (such as cocoa butter crystals) in a fat based edible product, particularly a fat based confectionery product for example a chocolate product. The invention also relates to a novel tempering method for fat based confectionery products, in particular chocolate products as well as to the preparation of a fat based seeding mass which can be used in traditional tempering methods.

Chemically, fats are triglycerides with three fatty acids connected to a glycerine molecule. Most fat systems form crystal with several different polymorphs structures. For fats containing only a small number of triglyceride like cocoa butter up to six different polymorphic forms have been identified. Different crystal types are formed depending upon the steric or energetic compatibility of the molecules, the temperature / temperature gradients they are submitted to and for how long this takes place. In general, the higher the temperature and the longer the crystal formation time, the denser and more perfect molecular ordering in polymorph crystal form occurs.

Chocolate tempering is a process in which chocolate mass is thermally treated to produce a fraction of homogeneously dispersed, highly stable fat crystals of the correct type, fraction and size. These crystals then grow to form a homogeneous fat crystal network during the cooling stage.

The major goal of tempering is to gently cool the warm chocolate through a multistage tempering machine, gradually reducing the temperature to "strike seeds" and initiate the first stages of nucleation and crystal growth. Primary nucleation is performed at cooled walls in the cooling section of the tempering machine, whose temperature determines the type of fat crystal formed at the wall. At temperatures below 22°C in the cooling section, cocoa butter fat crystal polymorphs are mainly of the unstable alpha (α) form. Beta three (βᵢᵢᵢ) / beta four (βᵢᵥ) polymorphs nuclei are formed as well as a small fraction of the stable beta five (βᵥ) polymorph. During mixing into the chocolate mass the unstable polymorphs get gradually transformed into the beta five (βᵥ) type due to the applied shear stresses and the temperature increase in the subsequent reheating section (Industrial Chocolate Manufacture and Use, edited by S. Beckett, 4th Edition, Chapter 13 - E.J. Windhab). It thus appears evident that obtaining stable cocoa butter crystals in a fat based product implies complex and time consuming procedures with a strict temperature control during the tempering cycles, followed by a slow cooling of the fat based tempered mass.

Thus there remains the problem of providing a method to generate stable cocoa butter crystals (principally of polymorph types (beta five (βᵥ) and beta six βᵥᵢ)) in a fat based mass and/or products which would not require the performance of a complex tempering procedure. There also remains the problem to provide a method to generate stable cocoa butter crystals in a fat based mass and/or product wherein the cooling time can be reduced without affecting the quality and/or stability of the generated crystals.

FR 2995182 (= WO 2014-037910) (Barry Callebaut) describes use of seeding to promote micro-aeration in a fat-based edible mass to improve the resistance of the product to blooming. The porosity of the products so obtained are low being a maximum of 4.5%, less than the aerated products of the present invention. This document provides a disincentive to a reader from aerating further. The problem addressed is to reduce bloom in conventional products and not to produce an aerated product as such. Increasing porosity above that taught to reduce bloom may be believed to change the sensory properties of the product leading to inconsistencies in taste between the conventional and bloom resistant versions.

US 4272558 (Bouette) describes (e.g. see col. 3, line 62 to col. 4, line 44) the use of seeding to promote bubble nucleation in a fat-based confectionery, however it is clear from the description that such seeds are angular sugar crystals and not fat based crystals such as cocoa butter crystals. The sugar crystal seed used in Bouette would not provide enhancements to extended fat crystal network in the final product. Bouette also does not appreciate the difficulties of incorporating fat-based crystals as seeds into a fat-based mass. The examples of Bouette use carbon dioxide at pressures of 10.5 kg cm-2 (= 10.3 bar) and 6 kg cm-2 (= 5.8 bar) and these pressures are much lower than used with carbon dioxide in preferred embodiments of the present invention.

US2011/159159 discloses generating cocoa butter crystals in a fat matrix.

J. Haedelt et al, Journal of Food Science, 72, no. 3, 1 April 2007, 138-142 discloses aerating with chocolate with carbon dioxide.

US2006/141110 discloses using pressurised carbon dioxide to generate cocoa butter crystals.

Machines with two mixing heads that are designed to produce foam masses using pressure beating are known, such as the machines available commercially in 1998 under the trade designation 'Mondomix type Twin-A 12' from Mondomix. This two headed machine was stated as being useful to produce products such as chocolate coated marshmallows in which one mixing head aerates egg white which is combined with hot sugar by the second mixing head. Machines that consist of twin extruders have been produced under the trade designation 'ECO twin' and were available commercially from Bühler for stated uses such as production of pet food and feed for industrial fish farming. Neither of these machines have been suggested by their manufacturers as being suitable for the uses as described herein.

There exists thus a need to solve one or more of the above mentioned problems.

It has been surprisingly found that by rapidly cooling a fat based mass which was previously saturated with CO₂, stable beta (β) type crystals of cocoa butter can be obtained, thus providing a solution to the outstanding problems mentioned above.

One aspect of the present invention relates to a method for generating stable cocoa butter crystals (conveniently in the form of a fat based seeding mass containing stable cocoa butter crystals) in a fat based edible product (conveniently a fat based confectionery product, more conveniently a chocolate and/or compound product) comprising the steps of:
a) incorporating carbon dioxide under pressure from 25 to 60 bar into an at least partially liquid fat-based mass (conveniently a liquid fat based confectionery mass, more conveniently a chocolate and/or compound liquid mass) comprising cocoa butter;
a') where the temperature of the fat-based mass obtained from step a) is decreased below minus (-) 25°C before step b) takes place; and
b) heating the fat-based mass at a temperature from minus (-) 25 to plus (+) 10°C.

A further aspect of the present invention provides a method for tempering chocolate and/or compound the method comprising the steps of:
a) incorporating CO₂ under pressure from 25 to 60 bar into an at least partially liquid fat-based chocolate mass comprising cocoa butter;
a') where the temperature of the fat-based mass obtained from step a) is decreased below minus (-) 25°C before step b) takes place;
b) heating the fat-based chocolate mass at a temperature from minus (-) 25 to plus (+) 10°C; and
c) mixing the seeding fat-based chocolate mass of step b) with un-tempered liquid chocolate.

Additional features and advantages of the present invention are described in, and will be apparent from, the description of the embodiments which are set out below with reference to the drawings in which:
Figures 1 to 3 show the X-ray diffraction (XRD) patterns of cocoa butter (CB) measured at various temperatures (the abscissa being the d - spacing of the crystal structure in Angstroms) where:
Figure 1 - XRD of CB saturated with carbon dioxide gas at a pressure of 40 bar.
Figure 2 - XRD of CB unpressurised without any gas dissolved therein.
Figure 3 - XRD of CB saturated with nitrogen gas at a pressure of 100 bar.

It has been surprisingly found that by cooling a fat based mass that comprises cocoa butter (such as a fat based confectionery, for example chocolate, compound and analogues thereof), the mass being saturated with pressurised carbon dioxide, stable crystals of cocoa butter can be obtained in the form of one or more beta (β) polymorph(s) thereof.

In one embodiment of the method(s) of the invention, advantageously, the same beneficial and unexpected effect(s) can be obtained even if the fat based mass is cooled rapidly.

In another embodiment, the fat based mass comprising cocoa butter (such as chocolate mass and/or compound mass) that is used in step a) is completely liquid.

In the invention, step a) of the method(s) of the invention is followed by an further cooling step a') where the temperature of the fat-based mass obtained from step a) is decreased to below minus (-) 25°C. In such, step a') is then followed by step b) of the method(s) of the invention. As it will be evident to the skilled person, under these circumstances, the fat-based mass obtained from step a') will be heated rather than cooled at a temperature of from minus (-) 25°C to plus (+) 10°C. Advantageously, this step a') provides for a more rapid process.

In yet other embodiment, the fat-based edible product is a confectionary product. In another embodiment, the fat based edible confectionery product is a chocolate product.

Preferred method(s) of the invention provide fat based edible products which are aerated. In another embodiment, the methods of the invention provide products which are macro or micro-aerated.

The present invention may optionally provide an aerated fat based confectionery product having a porosity of at least 5%, more preferably at least 6%, even more preferably at least 8%, most preferably at least 10%. In another embodiment, an aerated fat based confectionery product of the invention may have a porosity of at least 15%, usefully at least 20% more usefully at least 30%, for example at least 32%.

The present invention may provide an aerated fat based confectionery product having a porosity of up to 55%, preferably up to 50%. In an embodiment an aerated fat based confectionery product of the invention may have a porosity of up to 48%, for example up to 47%.

The present invention may provide an aerated fat based confectionery product having a porosity from 5% to 50%, preferably 6% to 40%, more preferably from 10% to 40%. In a further embodiment an aerated fat based confectionery product of the invention may have a porosity of from 30% to 50%, more preferably from 32% to 48%, most preferably from 33% to 47%.

Conveniently in step a) of the method(s) of the invention CO₂ may be incorporated into the liquid fat based mass at a pressure from 25 to 60 bar, more conveniently from 35 to 50 bar.

Usefully, the operative temperature for step a) may be from 10 to 50°C, usefully from 25 to 45°C.

Advantageously the operative temperature for step a) may allow the fat based mass, chocolate mass and/or compound mass to be in a liquid state.

Preferably the operative temperature for step a) is from 33 to 45°C, more preferably from 35 to 42°C.

Usefully in step b) of the method(s) of the invention the fat based edible mass is cooled at a temperature of from minus (-) 10°C to plus (+) 10°C, more usefully from minus (-) 5°C to plus (+) 5°C.

The stable fat crystals generated in the methods of the invention may comprise beta five (βᵥ) and/or beta six (βᵥᵢ) cocoa butter crystals.

The fat based mass obtained from step b) of the method(s) of the invention may be usefully kept under the same conditions of temperature and pressure and let solidify slowly. In such specific embodiment of the method of the invention, the fat based or chocolate mass may require that pressure and temperature conditions are modified for further use of the fat based and/or chocolate mass.

In another embodiment of the chocolate tempering method, the fat based mass obtained from step b) (seeding mass) may conveniently be mixed with un-tempered chocolate at a temperature of from 25 to 35°C, more conveniently about 30°C, by pumping it into the un-tempered chocolate flow.

In a further embodiment of the method(s) of the present invention, the fat based mass obtained from step b) may advantageously be kept at constant pressure while temperature is progressively increased. In such embodiment of the invention, the residual pressure of the fat based mass may be more advantageously used to pump the mass for further uses (for example to mix it with an un-tempered chocolate mass). A further advantage of this embodiment of the invention would be to provide a pumpable fat based mass comprising stable cocoa butter crystals, and such a mass may also provide bubble nucleators (fat crystals) once the pressure is released. The use of such mass(es) would allow improved (higher) levels of aeration to be achieved in the final chocolate product. In this embodiment the temperature of the mass derived from step b) may also be increased to a temperature of from 10 to 25°C while pressure is kept constant.

In a still yet other embodiment of the method(s) of the present invention, the fat based mass obtained from step b) may be usefully kept at constant temperature while pressure is progressively released. In such an embodiment, the fat based mass comprising stable fat crystals may solidify and possibly need to be re-melted for further use.

In a yet further embodiment of the method(s) of the present invention, the temperature of the fat based mass obtained from step b) may conveniently be progressively increased while pressure is released. In such embodiment, the mass would stay liquid maintaining the advantage of being able to be pumped where needed. In such embodiment, pressure release may occur at atmospheric pressure or alternatively at a pressure from 1 to 2 bar so that some residual excess pressure can be maintained to assist in pumping the mass. In such embodiment, the temperature of the mass derived from step b) may be increased to a temperature of from 10 to 30°C while pressure may be reduced (optionally simultaneously with the temperature increase) to a value of from 1 to 50 bar (for example from an initial pressure of 50 bar to a final pressure of 1 bar).

In a still another embodiment, the method(s) of the invention may be performed under conditions where the mass(es) are not subject to substantial shear force(s), preferably no shear force.

Certain terms as used herein are defined and explained below unless from the context their meaning clearly indicates otherwise.

The term 'fat based edible product' identifies edible products which are based on a fat continuous matrix. Non-limiting examples of such fat based edible products may be represented by fat based confectionery products as below defined, margarine, butter or spreads. In some embodiments, such fat continuous matrix may be represented by a substantially pure fat matrix.

The term 'fat based edible product composition or mass' identifies a fat-based mass (including its recipe and ingredients) which is used for the preparation of fat base edible products of the invention.

The term 'fat-based confectionery product' encompasses products that are based on chocolate and/or based on 'chocolate-like' components (such as 'compound'). The term 'chocolate-based' as used herein includes both products that are based on chocolate and/or based on 'chocolate-like' analogues, and thus for example may be based on dark, milk or white chocolate and/or compound.

The term 'chocolate' as used herein denotes any products that meet a legal definition of chocolate in any jurisdiction and also include products in which all or part of the cocoa butter are replaced by cocoa butter equivalents (CBE) and/or cocoa butter replacers (CBR). Chocolate coatings are also referred to herein as chocolate shells.

The terms 'chocolate compound' or 'compound' as used herein denote chocolate-like analogues characterized by presence of cocoa solids (which include cocoa liquor/mass, cocoa butter and cocoa powder) in any amount, notwithstanding that in some jurisdictions 'compound' may be legally defined by the presence of a minimum amount of cocoa solids.

The term 'chocolate confectionery' as used herein denotes a foodstuff which comprises chocolate and/or compound and optionally also other ingredients.

Preferred fat-based confectionery product(s) of the invention may comprise one or more: chocolate product, chocolate-like product (e.g. comprising cocoa butter replacers, cocoa-butter equivalents or cocoa-butter substitutes), chocolate coated product, chocolate-like coated product, chocolate coating for biscuits, wafers and/or other confectionery items, chocolate-like coatings for biscuits, wafers or other confectionery items, chocolate coating for ice-creams, chocolate-like coating for ice-creams, chocolate filling and/or chocolate-like filling.

The chocolate or chocolate-like fat-based confectionery product may be in form of a tablet, a bar, or a coating for confectionery products, wafer, biscuits or ice creams, among others. It may also comprise inclusions, chocolate layers, chocolate nuggets, chocolate pieces, chocolate drops. The fat-based confectionery product may further contain crispy inclusions e.g. cereals, like expanded or toasted rice or dried fruit pieces.

The term 'fat based confectionery product composition or mass' identifies a chocolate or chocolate-like mass (including its recipe and ingredients) which is used for the preparation of fat based confectionery products of the invention. The fat based confectionery product composition may be used to mould a tablet or bar, to coat confectionery items or to prepare more complex chocolate or chocolate-like based products. Optionally, prior to its use in the preparation of a fat based confectionery product of the invention, inclusions according to the desired recipe may be added to the fat based confectionery product composition.

As it will be apparent to a person skilled in the art, in some instances the fat based confectionery product of the invention will have the same recipe and ingredients as the corresponding fat based confectionery product composition while in other instances, particularly where inclusions are added or for more complex confectionery products, the final recipe of the fat based confectionery product may differ from that of the fat based confectionary product composition used to prepare it.

In fat based confectionery chocolate-like products cocoa butter is replaced by fats from other sources. Such products, generally contain lauric fat (cocoa butter substitute, CBS, obtained from the kernel of the fruit of palm trees), or non-lauric vegetable fats (based on palm or other specialty fats), cocoa butter replacer (CBR) or cocoa butter equivalent (CBE). Unfortunately, also CBE, CBR and more so the CBS primarily contain saturated fats and very low levels of the healthy unsaturated omega three and omega six fatty acids.

The term 'micro-aerated' denotes an aerated product wherein bubbles that are too small to be observed by the naked eye. Typically, for micro-aerated products, the bubble diameter is less than or equal to 100 micron.

The term 'macro-aerated' identifies an aerated product wherein bubbles that are visible by naked eye. Typically, for micro-aerated products, bubble diameter is more than 100 micron.

It should be understood that various changes and modifications to the presently described embodiments described herein will be apparent to those skilled in the art. Such changes and modifications can be made without departing from the scope of the present invention and without diminishing its attendant advantages. It is therefore intended that such changes and modifications be covered by the appended claims.

### Examples

The present invention will now be described in detail with reference to the following non limiting example which is by way of illustration only.

### Example 1

### Cocoa butter crystallization behaviour

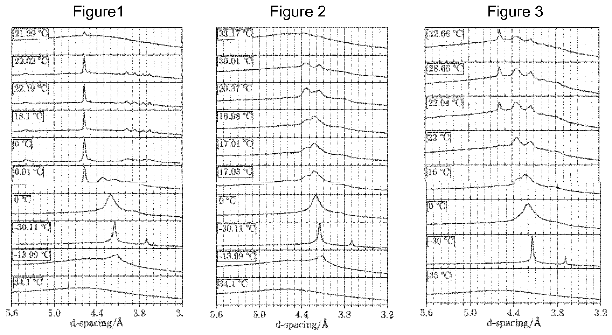

High pressure XRD measurements were performed in an apparatus comprising a thin-walled glass capillary. Cocoa butter (CB) was cold milled in liquid nitrogen to a fine powder and sieved to particle size of ≤ 125µm. The powder sample was poured into a glass capillary (Dimensions: L (length) 1 = 80, L (length) 2 = 10, Da (diameter) = 0.5, S (wall thickness) = 0.01 mm) at -23°C to prevent sticking of the sample powder to the capillary wall. Capillaries were stored in the fridge or transported in a cooling box. At the experimental stage the capillaries were mounted onto the goniometer head of the X-ray diffraction set-. The temperature of the capillary was set to 15°C using an Oxford Cryostream 700+ thermostating device. Reduced pressure was first applied for around 10 min to remove substantially all the air from inside the capillary to form a near vacuum therein. The capillary was then placed and adjusted in the X-ray beam. Measurements were performed once before pressurization and afterwards pressure was applied. Temperature-time profiles were programmed with the Cryostream and adapted controller. The X-ray diffraction patterns were recorded every 120 s at a wavelength of 0.69658 Å. The time-temperature program applied on the gas-saturated cocoa butter was the following:
1. Held for 60 minutes at 15°C.
2. Melt by increasing the temperature to 60°C by 5°C / min.
3. Keep at 60°C for 15 min (all is melted).
4. Cool to minus (-) 30°C by decreasing the temperature by 6° C / min; this rapid cooling programme leads to super cooling and amorphous solidification (no crystals).
5. Keep at minus (-) 30°C for 5 minutes.
6. Heat to 0°C by increasing the temperature by 5°C / min (sampling and X-Ray diffraction measurement at different time points taken as reported in Fig.1).
7. Keep at 0°C for 35 minutes.
8. Heat 0°C to from 16 to 18°C by increasing the temperature by 5°C / min.
9. Keep at from 16 to 18°C for 60 minutes.
10. Heat to from 20 to 22°C by increasing the temperature by 5°C / min.
11. Keep at from 20 to 22°C for 90 minutes.
12. Heat to 33°C by increasing the temperature by 2°C / min.
13. Keep at 33°C for 120 minutes.

In Figure 1 the diffraction patterns of pure CB (cocoa butter), CB saturated with CO₂ at 40 bar and with N₂ at 100 bar for different relevant temperatures are reported. After quenching by cooling liquid CB (from 10 minutes at 60°C) to -30°C a difference in the polymorphic form is already evident. N₂-saturated and CB without added gas showed the highly unstable polymorphic gamma (γ) form before transforming at higher temperatures to the alpha (α) form.

The CB sample at ambient pressure and the one pressurized with N₂ at 100 bar showed the alpha (α) polymorph (single peak at 4.2 Angstrom) at 0°C. Most surprisingly, the sample pressurized with CO₂ at 40 bar showed already at the very low temperature of 0°C an initial mixture of the more stable beta three (βᵢᵢᵢ) (two peaks at 4.3 and 4.15 Angstrom) and beta four (βᵢᵥ) polymorph forms (showing an additional peak at 4.6 Angstrom) transforming into the highly stable polymorph form beta five (βᵥ) (peaks at 4.6, no peak between 4.1 and 4.4 and new peaks in the range of 3.65 and 4.0 Angstrom) at 0°C during the temperature holding time of greater than about 3 to 5 minutes.
Samples pressurized with N₂ and also the sample held at ambient pressure without dissolved gas each transformed initially into the beta four (βᵢᵥ) polymorph (sometimes also denoted as beta prime (β'). Samples held at 100 bar under isothermal conditions, so further N₂ was dissolved, underwent a further transformation to the higher stable form beta five (βᵥ) the change occurring at the unexpectedly low temperature of 22°C.

To summarize, the evaluation by Synchrotron XRD measurements at elevated gas pressures clearly showed the following.

At a CO₂ pressure of 40 bar, the samples were surprisingly observed to transform into the highly stable beta five (βᵥ) polymorph at very low temperatures, as low as 0°C. Saturation with N₂ at a pressure of 100 bar at temperatures of 22°C also showed a less pronounced tendency for the beta four (βᵢᵥ) polymorph to transform to the beta five (βᵥ) polymorph. This compares to prior art observations where higher temperatures, typically greater than 28 to 30°C, as well as shear flow, were thought necessary to produce such a transformation.

Under the experimental conditions of temperature and-time that the samples were tested, non-pressurized cocoa butter did not form the most stable beta five (βᵥ) polymorphs and such transformation was only feasible if shear flow was additionally superimposed on the sample.

## Claims

1. Method for the generation of stable cocoa butter crystals in a fat-based edible product comprising:
a) incorporating CO₂ under pressure from 25 to 60 bar into an at least partially liquid fat-based mass comprising cocoa butter;
a') where the temperature of the fat-based mass obtained from step a) is decreased below minus (-) 25°C before step b) takes place; and
b) heating the fat-based mass at a temperature from minus (-) 25 to plus (+) 10°C.

2. Method according to claim 1, wherein the stable cocoa butter crystals are in the form of a fat-based seeding mass containing stable cocoa butter crystals.

3. Chocolate tempering method comprising:
a) incorporating CO₂ under pressure from 25 to 60 bar into an at least partially liquid fat-based chocolate mass comprising cocoa butter;
a') where the temperature of the fat-based mass obtained from step a) is decreased below minus (-) 25°C before step b) takes place;
b) heating the fat-based chocolate mass at a temperature from minus (-) 25 to plus (+) 10°C; and
c) mixing the seeding fat-based chocolate mass of step b) with un-tempered liquid chocolate.

4. A method according to claim 1, wherein the fat-based edible product is a confectionery product, for example a chocolate product.

5. A method according to any of claims 1 and 4, in which the fat-based edible product is aerated.

6. A method according to any preceding claim, in which the fat-based mass of step a) is completely liquid.

7. A method according to any preceding claim, in which in step a) CO₂ is incorporated into the at least partially liquid fat-based mass at a pressure between 35 and 50 bar.

8. A method according to any preceding claim, in which in step b) of the methods of the invention the fat-based edible mass is heated at a temperature from minus (-) 10 to plus (+) 10°C, preferably from minus (-) 5 to plus (+) 5°C.

9. A method according to any preceding claim, in which the stable fat crystals generated are crystals of cocoa butter in the form of beta five (βᵥ) and/or beta four (βᵢᵥ) polymorphs thereof.

10. A method according to any preceding claim, in which the fat-based mass obtained from step b) is kept under the same conditions of temperature and pressure and let solidify slowly.

11. A method according to any of claims 1 to 9, in which the fat-based mass obtained from step b) is kept at constant temperature while pressure is progressively released.

12. A method according to any of claims 1 to 9, in which the fat-based mass obtained from step b) temperature is progressively increased while pressure is released.

13. A method according to any preceding claim, in which the fat-based mass obtained from step b) (seeding mass) is mixed with un-tempered chocolate at a temperature of from 25 to 35°C, for example about 30°C, by pumping the mass into the un-tempered chocolate flow.

## Patentansprüche

1. Verfahren zur Erzeugung stabiler Kakaobutterkristalle in einem essbaren Produkt auf Fettbasis, das Folgendes umfasst:
a) das Einbringen von CO₂ unter Druck von 25 bis 60 bar in die mindestens teilweise flüssigfettbasierte Masse, die Kakaobutter umfasst;
a') wobei die Temperatur der aus Schritt a) erhaltenen fettbasierten Masse auf unter minus (-) 25 °C gesenkt wird, bevor Schritt b) stattfindet; und
b) das Erwärmen der fettbasierten Masse bei einer Temperatur von minus (-) 25 bis plus (+) 10 °C.

2. Verfahren nach Anspruch 1, wobei die stabilen Kakaobutterkristalle in Form einer fettbasierten Impfmasse, die stabile Kakaobutterkristalle enthält, vorliegen.

3. Schokoladentemperierverfahren, das Folgendes umfasst:
a) das Einbringen von CO₂ unter Druck von 25 bis 60 bar in die mindestens teilweise flüssigfettbasierte Schokoladenmasse, die Kakaobutter umfasst;
a') wobei die Temperatur der aus Schritt a) erhaltenen fettbasierten Masse auf unter minus (-) 25 °C gesenkt wird, bevor Schritt b) stattfindet;
b) das Erwärmen der fettbasierten Schokoladenmasse bei einer Temperatur von minus (-) 25 bis plus (+) 10 °C; und
c) das Mischen der impfenden fettbasierten Schokoladenmasse aus Schritt b) mit untemperierter flüssiger Schokolade.

4. Verfahren nach Anspruch 1, wobei das fettbasierte essbare Produkt ein Süßwarenprodukt, zum Beispiel ein Schokoladenprodukt, ist.

5. Verfahren nach einem der Ansprüche 1 und 4, wobei das fettbasierte essbare Produkt belüftet wird.

6. Verfahren nach einem der vorstehenden Ansprüche, wobei die fettbasierte Masse von Schritt a) vollständig flüssig ist.

7. Verfahren nach einem der vorstehenden Ansprüche, wobei in Schritt a) bei einem Druck zwischen 35 und 50 bar CO₂ in die mindestens teilweise flüssige fettbasierte Masse eingebracht wird.

8. Verfahren nach einem der vorstehenden Ansprüche, wobei in Schritt b) der Verfahren der Erfindung die fettbasierte essbare Masse bei einer Temperatur von minus (-) 10 bis plus (+) 10 °C, vorzugsweise von minus (-) 5 bis plus (+) 5 °C erwärmt wird.

9. Verfahren nach einem der vorstehenden Ansprüche, wobei die erzeugten stabilen Fettkristalle Kristalle von Kakaobutter in Form von beta-fünf- (βᵥ) und/oder beta-vier- (βᵢᵥ) Polymorphen davon sind.

10. Verfahren nach einem der vorstehenden Ansprüche, wobei die aus Schritt b) erhaltene fettbasierte Masse unter den gleichen Bedingungen von Temperatur und Druck gehalten wird und sich langsam verfestigen gelassen wird.

11. Verfahren nach einem der Ansprüche 1 bis 9, wobei die aus Schritt b) erhaltene fettbasierte Masse bei konstanter Temperatur gehalten wird, während der Druck progressiv gelöst wird.

12. Verfahren nach einem der Ansprüche 1 bis 9, wobei die Temperatur der aus Schritt b) erhaltenen fettbasierten Masse progressiv erhöht wird, während der Druck gelöst wird.

13. Verfahren nach einem der vorstehenden Ansprüche, wobei die aus Schritt b) erhaltene fettbasierte Masse (Impfmasse) mit untemperierter Schokolade bei einer Temperatur von 25 bis 35 °C, zum Beispiel ungefähr 30 °C, durch Pumpen der Masse in den untemperierten Schokoladenstrom gemischt wird.

## Revendications

1. Procédé de production de cristaux de beurre de cacao stables dans un produit comestible à base de matière grasse comprenant :
a) l'incorporation de CO₂ sous une pression de 25 à 60 bars dans une masse à base de matière grasse au moins partiellement liquide comprenant du beurre de cacao ;
a') où la température de la masse à base de matière grasse obtenue à l'étape a) est réduite en dessous de moins (-) 25 °C avant que l'étape b) ne se déroule ; et
b) le chauffage de la masse à base de matière grasse à une température de moins (-) 25 à plus (+) 10 °C.

2. Procédé selon la revendication 1, dans lequel les cristaux de beurre de cacao stables se présentent sous la forme d'une masse d'ensemencement à base de matière grasse contenant des cristaux de beurre de cacao stables.

3. Procédé de tempérage du chocolat comprenant :
a) l'incorporation de CO₂ sous une pression de 25 à 60 bars dans une masse de chocolat à base de matière grasse au moins partiellement liquide comprenant du beurre de cacao ;
a') où la température de la masse à base de matière grasse obtenue à l'étape a) est réduite en dessous de moins (-) 25 °C avant que l'étape b) ne se déroule ;
b) le chauffage de la masse de chocolat à base de matière grasse à une température de moins (-) 25 à plus (+) 10 °C ; et
c) le mélange de la masse de chocolat à base de matière grasse d'ensemencement de l'étape b) avec du chocolat liquide non tempéré.

4. Procédé selon la revendication 1, dans lequel le produit comestible à base de matière grasse est un produit de confiserie, par exemple un produit de chocolat.

5. Procédé selon une quelconque des revendications 1 et 4, dans lequel le produit comestible à base de matière grasse est aéré.

6. Procédé selon une quelconque revendication précédente, dans lequel la masse à base de matière grasse de l'étape a) est totalement liquide.

7. Procédé selon une quelconque revendication précédente, dans lequel à l'étape a), du CO₂ est incorporé dans la masse à base de matière grasse au moins partiellement liquide à une pression comprise entre 35 et 50 bars.

8. Procédé selon une quelconque revendication précédente, dans lequel à l'étape b) des procédés de l'invention, la masse comestible à base de matière grasse est chauffée à une température de moins (-) 10 à plus (+) 10 °C, de préférence de moins (-) 5 à plus (+) 5 °C.

9. Procédé selon une quelconque revendication précédente, dans lequel les cristaux stables de matière grasse produits sont des cristaux de beurre de cacao sous forme de polymorphes bêta cinq (βᵥ) et/ou bêta quatre (βᵢᵥ) de ceux-ci.

10. Procédé selon une quelconque revendication précédente, dans lequel la masse à base de matière grasse obtenue à l'étape b) est maintenue dans les mêmes conditions de température et de pression et est laissée se solidifier lentement.

11. Procédé selon une quelconque des revendications 1 à 9, dans lequel la masse à base de matière grasse obtenue à l'étape b) est maintenue à température constante tandis que la pression est progressivement libérée.

12. Procédé selon une quelconque des revendications 1 à 9, dans lequel la masse à base de matière grasse obtenue à la température de l'étape b) est progressivement augmentée alors que la pression est libérée.

13. Procédé selon une quelconque revendication précédente, dans lequel la masse à base de matière grasse obtenue à l'étape b) (masse d'ensemencement) est mélangée à du chocolat non tempéré à une température de 25 à 35 °C, par exemple d'environ 30 °C, par pompage de la masse dans le flux de chocolat non tempéré.
